# EUROPEAN PATENT APPLICATION

(11) **EP 4 528 574 A2**
(43) Date of publication of application: **26.03.2025**
(21) Application number: 24199655.2
(22) Date of filing: 11.09.2024
(51) Int. Cl.: G06F 30/392, G06F 30/394, H01L 23/00

(54) **SYSTEMS AND METHODS FOR ENHANCING DIE-TO-DIE CONNECTIVITY IN SEMICONDUCTOR DEVICES**

(30) Priority: 20.09.2023 US 202363584092 P; 23.04.2024 US 202418643977
(71) Applicant: Avago Technologies International Sales Pte. Limited, Singapore 768923 (SG)
(72) Inventor: Gentry, Jason T., Windsor, CO 80550 (US); Tufano, AJ, Fort Collins, CO 80528 (US)
(74) Representative: Dilg, Haeusler, Schindelmann Patentanwaltsgesellschaft mbH

(57) **Abstract**

The subject technology is directed to systems and methods for enhancing die-to-die connectivity in semiconductor devices. According to an embodiment, the subject technology provides a device that includes a first layer comprising a first block and a second layer comprising a second block. The device further includes a third layer coupled to and positioned between the first and second layers. The first and second layers are aligned at a first region of the first connection, based on a set of design strategies. Embodiments of the subject technology enable automated and efficient routing of signals across dice, accommodating multiple instantiations of circuit blocks with various orientations. This ensures minimal signal path length and high-density interconnects by minimizing the physical footprint of connections and adhering to stringent design rule checks within a 3D integrated circuit layout. There are other embodiments as well.

## Description

This document generally relates to semiconductor technologies.

### FIELD OF INVENTION

The subject technology is directed to systems and methods for die-to-die integration in semiconductor devices.

### BACKGROUND OF THE INVENTION

Over the past decade, advancements in the design of three-dimensional (3D) semiconductor packaging have been of significant interest to the semiconductor industry. These 3D configurations, which involve stacking multiple semiconductor dice in a vertical arrangement, require reliable die-to-die connectivity to ensure efficient communication and power distribution across the stacked dice.

Some approaches use hybrid copper bonding (HCB) to establish electrical connections between dice. For example, the term "hybrid copper bonding" may refer to a structure that combines dielectric materials with metal materials to form interconnections for die-to-die connectivity in 3D semiconductor packaging. To establish a robust connection between dice, the HCBs must be routed to connect block pins on one die with corresponding block pins on other dice. However, efficiently routing HCBs remains a challenging task due to resource constraints in certain areas of a block, where existing circuit elements or structures limit the available space for HCB placement. These constraints are further complicated by the integration of multiply-instantiated blocks (MIBs) within semiconductor dice. For instance, the term "multiply-instantiated block" may refer to a functional unit that can be reused multiple times within the same die or across multiple dice. MIBs-varying in their orientations and locations within the semiconductor stack-require that each instantiation of a block be effectively interconnected, thereby posing further challenges in achieving consistent and reliable die-to-die connectivity.

Various approaches for die-to-die integration have been explored, but they have proven to be insufficient. It is important to recognize the need for new and improved systems and methods for optimizing die-to-die connectivity in semiconductor devices.

### BRIEF DESCRIPTION OF THE DRAWINGS

Figure 1 is a simplified diagram illustrating a semiconductor device with a 3D interconnect structure according to the embodiments of the subject technology.
Figure 2 is a simplified diagram illustrating a semiconductor device with a 3D interconnect structure according to the embodiments of the subject technology.
Figure 3 is a simplified diagram illustrating same-die and cross-die connectivity within a semiconductor device according to the embodiments of the subject technology.
Figure 4 is a simplified diagram illustrating a method for identifying available regions for establishing die-to-die connectivity within a semiconductor device according to the embodiments of the subject technology.
Figure 5 is a simplified diagram illustrating a method for identifying unavailable regions for establishing die-to-die connectivity within a semiconductor device according to the embodiments of the subject technology.
Figure 6 is a simplified diagram illustrating a method for determining regions for establishing die-to-die connectivity within a semiconductor device according to the embodiments of the subject technology.
Figure 7 is a simplified diagram illustrating a method for determining HCB placement across multiply-instantiated blocks within a semiconductor device according to the embodiments of the subject technology.
Figure 8 is a simplified diagram illustrating a method for determining pin placement across multiply-instantiated blocks within a semiconductor device according to the embodiments of the subject technology.
Figure 9 is a simplified flow diagram illustrating a method for determining die-to-die connectivity within a semiconductor device according to the embodiments of the subject technology.

### DETAILED DESCRIPTION OF THE INVENTION

The subject technology is directed to systems and methods for enhancing die-to-die connectivity in semiconductor devices. According to an embodiment, the subject technology provides a device that includes a first layer comprising a first block and a second layer comprising a second block. The device further includes a third layer coupled to and positioned between the first and second layers. The first and second layers are aligned at a first region of the first connection, based on a set of design strategies. Embodiments of the subject technology enable automated and efficient routing of signals across dice, accommodating multiple instantiations of circuit blocks with various orientations. This ensures minimal signal path length and high-density interconnects by minimizing the physical footprint of connections and adhering to stringent design rule checks within a 3D integrated circuit layout. There are other embodiments as well.

3D integrated circuits (IC) may refer to semiconductor circuits manufactured by vertically stacking two or more semiconductor dice. For instance, a die may include one or more logic blocks, which are functional units configured for performing certain computational or storage tasks. In some cases, a die may include multiply-instantiated blocks (MIBs) that can be reused multiple times within the same die or design. These blocks have identical or similar functionality but may be instantiated in different contexts or locations. Interconnections between semiconductor dice can be realized using various techniques such as through-silicon vias (TSVs) and hybrid copper bonding (HCB). HCB may include bonding between copper or other metals (e.g., gold, etc.) and dielectric materials, which can be organic (e.g., small molecules or monomers, etc.) or inorganic (e.g., silicon oxide, other metal oxides, etc.).

The integration of 3D ICs involves aligning and connecting HCBs across vertically stacked semiconductor dice to ensure optimal inter-die communication. For effective operation, HCBs on the lower semiconductor die (e.g., a bottom die) must be aligned with corresponding HCBs on the upper die (e.g., a top die) to achieve the shortest possible wire lengths to the associated logic blocks in the upper metal layers. However, the structural density within a die often results in limited space for the placement of HCBs, as upper metal layers might be preoccupied with other circuits or structural elements. Such an assignment complexity is further amplified by the presence of multiply-instantiated blocks within the die. Each instantiation of a logic block, while functionally equivalent, may face unique spatial constraints based on its specific location and orientation within the die. These constraints must be tracked not only within a single die but across the entire die stack to ensure optimal signal routing. As the scale of semiconductor design continues to increase, it becomes a challenging task to maintain efficient and effective connectivity across all layers of a 3D IC.

In various embodiments, the subject technology provides methods and systems for improving the connectivity and performance of 3D ICs through optimized placement and routing of HCBs across stacked semiconductor dice. Embodiments of the subject technology involve an algorithmic framework that analyzes the spatial configuration of each die to identify optimal paths for signal routing that minimize impedance and length. The algorithmic framework facilitates a coordinated approach to signal routing across the entire 3D IC stack, ensuring that all inter-die connections are precisely aligned and optimally configured for signal transmission. This approach also addresses the challenges posed by MIBs by allowing for their flexible placement and orientation across the die stack while ensuring consistent and efficient signal connectivity. By streamlining the design process, the system reduces the complexity and time involved in the design phase, enabling more rapid development cycles for semiconductor devices.

The following description is presented to enable one of ordinary skill in the art to make and use the invention and to incorporate it in the context of particular applications. Various modifications, as well as a variety of uses in different applications, will be readily apparent to those skilled in the art, and the general principles defined herein may be applied to a wide range of embodiments. Thus, the subject technology is not intended to be limited to the embodiments presented but is to be accorded the widest scope consistent with the principles and novel features disclosed herein.

In the following detailed description, numerous specific details are set forth in order to provide a more thorough understanding of the subject technology. However, it will be apparent to one skilled in the art that the subject technology may be practiced without necessarily being limited to these specific details. In other instances, well-known structures and devices are shown in block diagram form, rather than in detail, in order to avoid obscuring the subject technology.

The reader's attention is directed to all papers and documents which are filed concurrently with this specification, and which are open to public inspection with this specification, and the contents of all such papers and documents are incorporated herein by reference. All the features disclosed in this specification, (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" in some manner relative to another element (e.g., disposed on, disposed between, disposed under, disposed adjacent to, or disposed in some other relative manner), it is to be understood that the elements can be directly disposed relative to the other element (e.g., disposed directly on another element), or have intervening elements present between the elements. In contrast, when an element is referred to as being "disposed directly" relative to another element, it should be understood that no intervening elements are present in the "direct" example. However, the existence of a direct disposition does not exclude other examples in which intervening elements may be present.

Similarly, when an element is referred to herein as being "bonded" to another element, it is to be understood that the elements can be directly bonded to the other element (without any intervening elements) or have intervening elements present between the bonded elements. In contrast, when an element is referred to as being "directly bonded" to another element, it should be understood that no intervening elements are present in the "direct" bond between the elements. However, the existence of direct bonding does not exclude other forms of bonding, in which intervening elements may be present.

Likewise, when an element is referred to herein as being a "layer," it is to be understood that the layer can be a single layer or include multiple layers. For example, a conductive layer may comprise multiple different conductive materials or multiple layers of different conductive materials, and a dielectric layer may comprise multiple dielectric materials or multiple layers of dielectric materials. When a layer is described as being coupled or connected to another layer, it is to be understood that the coupled or connected layers may include intervening elements present between the coupled or connected layers. In contrast, when a layer is referred to as being "directly" connected or coupled to another layer, it should be understood that no intervening elements are present between the layers. However, the existence of directly coupled or connected layers does not exclude other connections in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

One general aspect includes a device, which comprises a first layer comprising a first block, the first block comprising a first pin. The device further comprises a second layer comprising a second block, the second block comprising a second pin. The device further comprises a third layer coupled to and positioned between the first layer and the second layer, the third layer comprising a first connection coupled to and positioned between the first pin and the second pin, the first pin and the second pin sharing a first connectivity. The first layer and the second layer are aligned at a first region of the first connection based on a set of design strategies.

Implementations may include one or more of the following features. The first connection comprises a hybrid copper bonding. A distance between the first pin and the first connection is less than or equal to 30 um. The first block comprises a multiply-instantiated block. The set of design strategies comprises a first set of placement constraints and a second set of placement constraints. The first set of placement constraints is associated with a second region available for positioning the first connection. The second set of placement constraints is associated with a third region unavailable for positioning the first connection. The first region is determined based at least on the second region and the third region. The first layer further comprises a third block, the third block comprising a third pin, the first pin and the third pin share a second connectivity.

According to another embodiment, the subject technology provides a method, which comprises receiving a first layout of a first layer, the first layer comprising a first block, the first block comprising a first pin. The method further comprises receiving a second layout of a second layer, the second layer comprising a second block, the second block comprising a second pin. The method further comprises receiving a third layout of a third layer, the third layer being coupled to and positioned between the first layer and the second layer, the third layer comprising a first connection configured to couple the first pin to the second pin, the first pin and the second pin sharing a first connectivity. The method further comprises identifying a first region available for positioning the first connection based on a first set of placement constraints. The method further comprises identifying a second region unavailable for positioning the first connection based on a second set of placement constraints. The method further comprises determining a third region for positioning the first connection based at least on the first region and the second region, the first layer and the second layer being aligned at the third region of the first connection.

Implementations may include one or more of the following features. The first layer further comprises a third block, the first block being characterized by a first orientation, the third block being characterized by a second orientation, the first orientation being different from the second orientation. The third block comprises a third pin, the third pin is configured to couple to a second connection of the third layer. The first pin and the third pin share a second connectivity. The method further comprises determining a fourth region for positioning the second connection. The method further comprises determining an association between the first connection and the second connection by mapping the third region and the fourth region onto a reference block. The method further comprises determining a first pin configuration characterizing the first pin and the second pin based on the mapping of the third region and the fourth region on the reference block. The first block comprises a multiply-instantiated block. The first set of placement constraints is associated with the first layout and the second layout and the third layout.

According to yet another embodiment, the subject technology provides a device, which comprises a first layer comprising a first block, the first block comprising a first pin. The device further comprises a second layer comprising a second block, the second block comprising a second pin. The device further comprises a third layer coupled to and positioned between the first layer and the second layer, the third layer comprising a first connection coupled to and positioned between the first pin and the second pin. The first layer and the second layer are aligned at a first region of the first connection, and the first region is determined by: identifying a second region available for positioning the first connection based on a first set of placement constraints; identifying a third region unavailable for positioning the first connection based on a second set of placement constraints; and determining the third region based at least on the first region and the second region.

Implementations may include one or more of the following features. The first block comprises a multiply-instantiated block. A distance between the first pin and the first connection is less than or equal to 30 um. The first connection comprises a hybrid copper bonding. The first layer further comprises a third block, the third block comprises a third pin, and the third pin is configured to couple to a second connection of the third layer. The first connection is associated with the second connection.

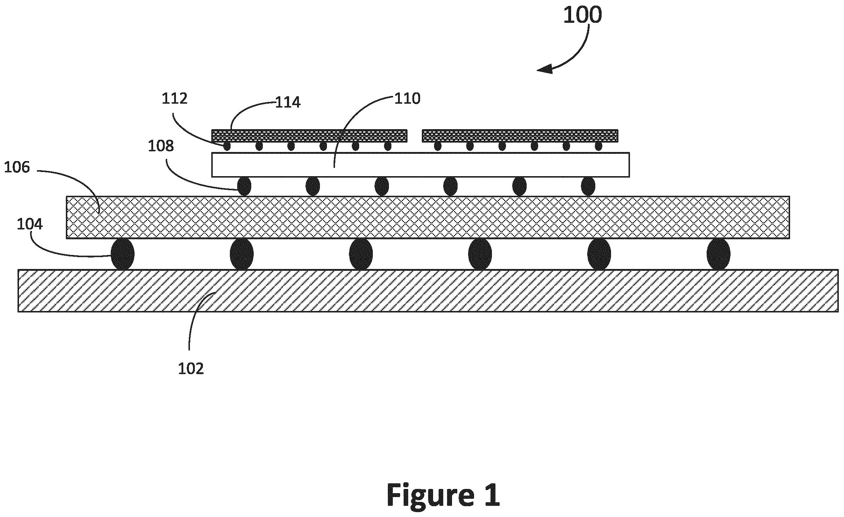

Figure 1 is a simplified diagram illustrating a semiconductor device 100 with a 3D interconnect structure according to the embodiments of the subject technology. This diagram is merely an example, which should not unduly limit the scope of the claims. One of ordinary skill in the art would recognize many variations, alternatives, and modifications. As shown, semiconductor device 100 includes a substrate 102. The term "substrate" can refer to a circuit board, on which integrated circuits and other electrical connections are mounted. The substrate can provide a stable platform for the components, along with the necessary electrical connections for them to interact and function as a complete system. For instance, substrate 102 provides a connection for semiconductor device 100 to a printed circuit board (PCB) (not shown) to facilitate electrical communication and power transfer.

Semiconductor device 100 may further include an interposer 106 coupled to substrate 102 via a ball connection 104. The term "interposer" may refer to an intermediate substrate or layer utilized in 2.5D or 3D IC circuits to facilitate electrical connections between stacked dice or between a die and a substrate (e.g., substrate 102). The interposer may comprise both silicon and organic materials. As an example, multiple circuits can be placed side-by-side on interposer 106 to achieve better interconnect density and performance. The individual circuit can be bonded to interposer 106 through ball connection 104. The term "ball connection" may refer to solder ball connections that are small, rounded points of solder that electrically and mechanically connect components or substrates. For instance, ball connection 104 could be utilized in ball grid array (BGA) configurations to attach interposer 106 to substrate 102.

In certain embodiments, semiconductor device 100 may be configured in a 3D stacking configuration and includes a first die 114 and a second die 110 coupled via an interconnect 112. For instance, the terms "die" or "semiconductor die" may refer to a piece or segment of semiconductor material (e.g., silicon), which contains integrated circuitry. This integrated circuitry can encompass various electronic components such as transistors, capacitors, resistors, and other microelectronic structures, which together perform specific electronic functions. A die may include, but is not limited to, processing units, memory arrays, specialized computing modules, and/or the like.

In some implementations, first die 114 may be coupled to second die 110. Accordingly, the first die 114 may also be referred to as a "top die" and the second die 110 may be referred to as a "bottom die." It is to be appreciated that the terms "top" and "bottom" denote relative positional relationships and are not intended to imply strict vertical orientations. Interconnect 112 may include a hybrid copper bond, which can include a fusion of copper-based materials that facilitate electrical connection and thermal performance between semiconductor modules (e.g., first die 114 and second die 110). The hybrid copper bond could provide robust electrical paths while also offering superior heat dissipation characteristics in high-performance applications.

In a 3D stacking configuration, second die 110 may be coupled to interposer 106 via a backside bump 108. The term "backside bump" may refer to a protrusion on the back of a semiconductor module (e.g., a circuit, a die, a chip module, etc.). The backside bump can be used for connecting stacked dice and facilitating dense and reliable interconnections. Backside bump 108 may include but is not limited to, a controlled collapse chip connection (C4), copper pillar (CuP) connections, and/or the like. These structures enhance mechanical robustness and facilitate power and signal delivery across semiconductor devices.

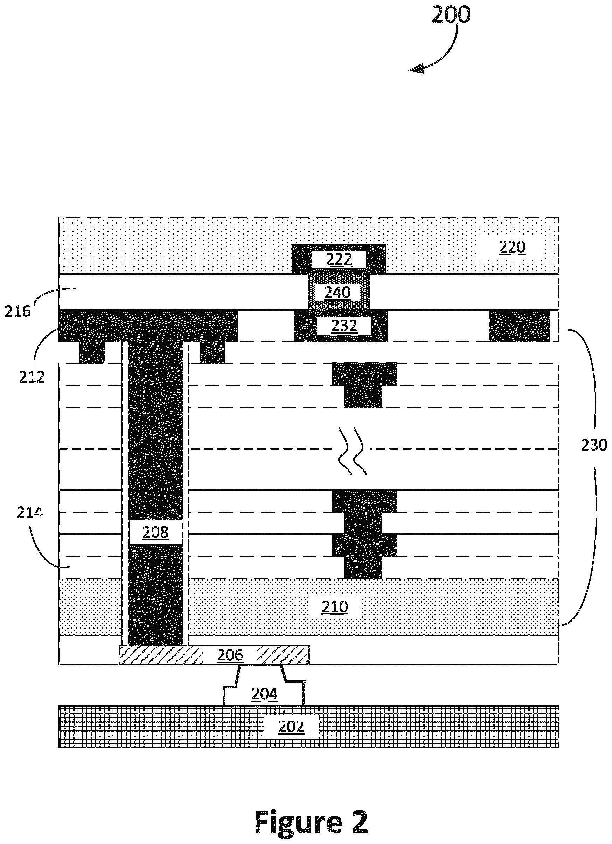

Figure 2 is a simplified diagram illustrating a semiconductor device 200 with a 3D interconnect structure according to the embodiments of the subject technology. This diagram is merely an example, which should not unduly limit the scope of the claims. One of ordinary skill in the art would recognize many variations, alternatives, and modifications.

As shown, semiconductor device 200 may include first circuit 220 and second circuit 230. For example, first circuit 220 includes a first block, which includes first pin 222. The term "pin" may refer to an electrical contact point designed to connect a circuit with external components or other circuits. Second circuit 230 includes second pin 232. Pins such as first pin 222 and second pin 232 facilitate the transmission of signals or power between different layers or modules within semiconductor device 200. In some embodiments, layer 216 may be coupled to and positioned between first circuit 220 and second circuit 230. Layer 216 may include, but is not limited to a power grid strap, a metal layer, conductive traces, micro-wires, and/or the like. For example, layer 216 includes first connection 240 coupled to and positioned between first pin 222 and second pin 232. First pin 222 and second pin 232 may share a first connectivity. In some embodiments, a distance between first pin 222 and first connection 240 may be less than or equal to 30 um. Depending on the implementation, first connection 240 includes a hybrid copper bonding, which can include a fusion of copper-based materials that facilitate electrical connection and thermal performance between first circuit 220 and second circuit 230.

In various implementations, first circuit 220 and second circuit 230 may be aligned through first connection 240 at a first region. For instance, first circuit 220 includes a first HCB, and second circuit 230 includes a second HCB. The first and second HCB are aligned to form first connection 240. This alignment is important to ensure the signal integrity is maintained across the 3D IC stack, minimizing the potential for signal loss or degradation. The placement of first connection 240 may be determined based on a set of design strategies. For example, the term "design strategy" may refer to a set of principles, methods, and considerations that guide the layout and configuration of integrated circuits. These strategies account for several considerations such as spatial limitations, signal routing optimization, impedance minimization, thermal considerations, and mechanical alignment tolerances. In some cases, the design strategies also accommodate potential variations in block orientation and location of MIBs to facilitate consistent connectivity.

In some examples, the set of design strategies may include a first set of placement constraints and a second set of placement constraints. The first set of placement constraints may be associated with a region available for positioning the first connection. The second set of placement constraints may be associated with a region unavailable for positioning the first connection. The term "placement constraints" may refer to the predetermined set of rules that govern where components can be located within a semiconductor layout. The placement constraints may take into account various factors such as electrical performance, manufacturability, thermal management, physical space requirements, and/or the like.

In various implementations, second circuit 230 includes layer 212, which is configured to couple to first connection 240 to establish an electrical connection between first circuit 220 and second circuit 230. In some embodiments, second circuit 230 further includes transistor 210. Transistor 210 may be used to create logic gates and various digital circuits, which can be configured for various function executions (e.g., signal processing, data computation, etc.) and ensure efficient circuit operations. Depending on the implementations, second circuit 230 may further include one or more metal layers 214 to establish interconnects between transistor 210 and layer 212 and/or among various circuit elements of second circuit 230, ensuring uninterrupted signal flow and power distribution. In an example, metal layer 214 may be made of copper or aluminum and is formed through a physical vapor deposition (PVD) process such as sputtering or evaporation.

In various implementations, first circuit 220 and second circuit 230 may be stacked on an interposer 202, which is configured to facilitate integration between the stacked circuits (e.g., first circuit 220 and second circuit 230) and the package substrate (e.g., substrate 102 of Figure 1). For instance, second circuit 230 can be coupled to interposer 202 via interconnect 204, which provides a robust physical connection and efficient electrical conduction. As an example, interconnect 204 may include, but is not limited to, a solder bump, a micro-bump, a controlled collapse chip connection (C4), copper pillar (CuP) connections, and/or the like.

Depending on the implementation, semiconductor 200 further includes first via 208. First via 208 may be configured to connect one or more components of semiconductor device 200 for electrical communication and power delivery. For instance, the term "via" refers to a structure that facilitates a vertical electrical connection between different layers or components within a semiconductor device. First via may include, without limitation, a through-silicon via, a blind via, a thermal via, a buried via, and/or the like. As an example, first via 208 may include a through-silicon via.

In some cases, first via 208 may be coupled to a grid 206 to receive electrical power from interconnect 204 and transmit the electrical power to second circuit 230 and first circuit 220. For example, the term "grid" may refer to a systematic network of interlinking lines or tracks that serve as conduits for distributing power, signals, or grounds across the semiconductor device. Grids might be realized in diverse configurations ranging from regular structures with uniform spacing to custom designs tailored for specific routing or power needs. Grid 206 may include, without limitation, power distribution grids, clock grids, ground grids, and/or the like.

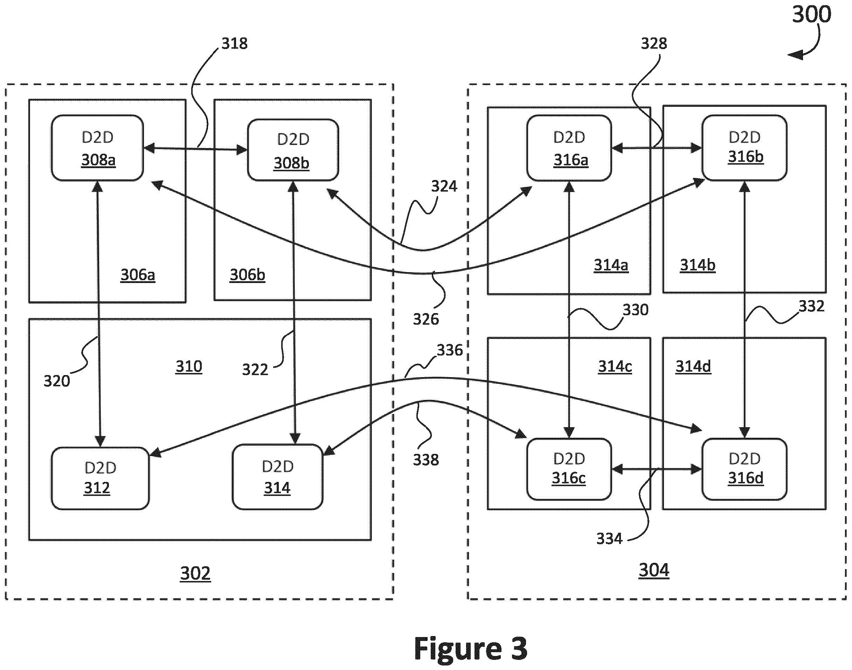

Figure 3 is a simplified diagram illustrating same-die and cross-die connectivity within a semiconductor device 300 according to the embodiments of the subject technology. This diagram is merely an example, which should not unduly limit the scope of the claims. One of ordinary skill in the art would recognize many variations, alternatives, and modifications.

As shown, semiconductor device 300 includes first layer 302 and second layer 304. For instance, first layer 302 may be a portion of first circuit 220 of Figure 2, and second layer 304 may be a portion of second circuit 230 of Figure 2. First layer 302 may be coupled to second layer 304 to establish die-to-die connectivity. In some embodiments, first layer 302 includes block 306a, which includes pin 308a. Depending on the implementation, block 306a may include a multiply-instantiated block utilized in various instances across first layer 302. For example, block 306b is also a representation of block 306a in a different instantiation within first layer 302. Block 306b may include pin 308b. The use of Mills offers scalability and reusability of design components within a semiconductor layout, enhancing design efficiency and reducing time-to-market for complex semiconductor devices.

In some examples, first layer 302 further includes block 310, which includes pin 312 and pin 314. Second block 310 may include a single instance block. The synchronization within the same die is important for maintaining signal integrity and facilitating coherent communication paths. For instance, pin 308a and pin 308b share connectivity 318. The term "connectivity" may refer to the establishment of communication between two or more components within a semiconductor device. This may include direct or indirect electrical connections that enable the transfer of signals, power, or data between the components. This shared connectivity allows the replicated blocks within the same die to communicate and operate efficiently without signal degradation or delay. The same-die coordination between these MIBs ensures that each instance can access the HCBs without compromising the connectivity of other blocks or pins.

In some embodiments, pins associated with different blocks may coordinate on the same die. For example, pin 308a and pin 312 share connectivity 320. Pin 308b and pin 314 share connectivity 314. Connectivity 320 and 322 may be established through the HCBs that enable signal communication across the z-axis between vertically stacked dice. The HCBs provide the physical interconnects that facilitate signal transmission between the various layers of the semiconductor device, allowing for multi-layer communication within the 3D IC structure.

In various implementations, second layer 304 includes block 314a. Block 314a may include a multiply-instantiated block utilized in various instances across second layer 304. Blocks 314b, 314c, and 314d may be the representations of block 316a in a different instantiation within second layer 304. Block 314a may include pin 316a. Block 314b may include pin 316b. Block 314c may include pin 316c. Block 314d may include pin 316d. Similar to blocks 308a and 308b of first layer 302, each instance of block 314a may share connectivity to establish same-die synchronization. For instance, pins 316a and 316b may share connectivity 328. Pins 316a and 316c may share connectivity 330. Pins 316b and 316d may share connectivity 332. Pins 316c and 316d may share connectivity 334.

In some examples, cross-die synchronization is achieved through inter-layer connections, facilitating communication between dice. For instance, pins 316a and 308b may share connectivity 324. Pins 316b and 308a may share connectivity 326. Pins 316d and 312 may share connectivity 336. Pins 316c and 314 may share connectivity 338. The cross-die synchronization allows for a seamless flow of signals across the multiple layers of the 3D IC, leading to improvements in the overall speed and efficiency of the semiconductor device. Additionally, this synchronization supports the functional and physical integration of MIBs across different layers, thereby enhancing the overall design scalability and efficiency. Same-die synchronization and cross-die synchronization facilitate the concurrent design and layout of circuits, enhancing the overall functionality and efficiency of the IC. It is to be appreciated that optimizing die-to-die connectivity and HCB placement is important for ensuring such synchronization, enabling complex IC designs to meet the growing demands for higher performance and miniaturization in electronic devices.

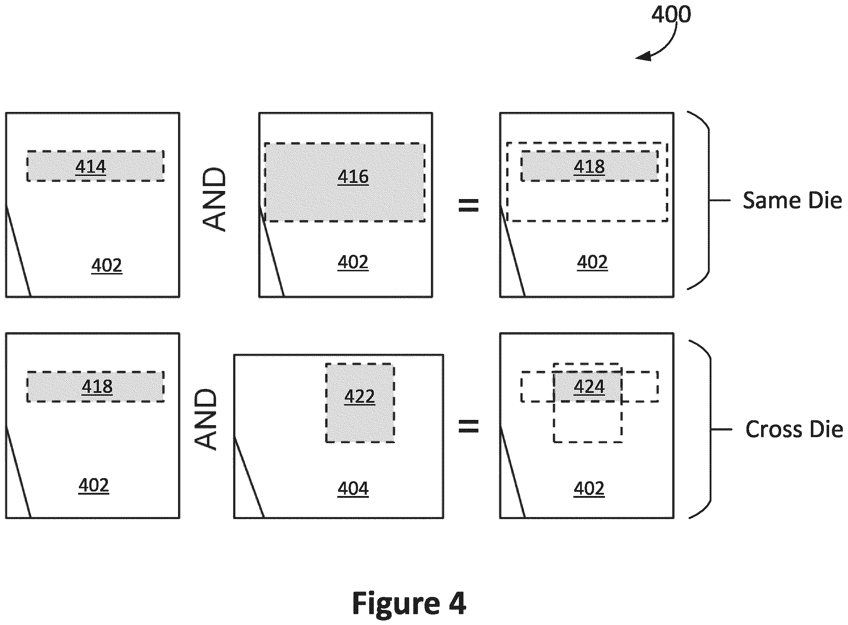

Figure 4 is a simplified diagram illustrating a method for identifying available regions for die-to-die connectivity within a semiconductor device 400 according to the embodiments of the subject technology. This diagram is merely an example, which should not unduly limit the scope of the claims. One of ordinary skill in the art would recognize many variations, alternatives, and modifications.

In various implementations, the process of designing 3D ICs includes identifying available regions to place the connections (e.g., pins and/or HCBs) that facilitate communication between different layers of the stack. The process involves an analysis of the stacked dice to ensure the placement of pins and HCBs adheres to placement constraints and maintains signal integrity across semiconductor device 400. For example, pins may be grouped according to their related functions or signals. Subsequent analysis involves an assessment of shared connectivity between these clusters, both within a single die and across multiple dice in semiconductor device 400. This assessment is to identify an "effective region" of overlap that accommodates all involved pins, thus ensuring their unimpeded functionality and physical interconnectivity.

In some examples, a first layout of first layer 402 may be analyzed to identify regions 414 and 416, which represent desired locations for pin placement. An intersection of regions 414 and 416 results in the effective same-die region 418. In other words, region 418 may represent the permissible region where pins and/or HCBs can be legally placed, avoiding areas with routability challenges due to existing structures. For cross-die considerations, similar identification of effective regions may occur on a different layer, as shown with region 422 on second layer 404. For instance, region 422 may be identified by analyzing a second layout of second layer 404. In some embodiments, region 418 on first layer 402 and region 422 on second layer 404 may be examined for overlapping areas where pins and/or HCBs can be placed. Accordingly, the resultant effective region 424 may be identified as the available region for establishing die-to-die connectivity, ensuring proper alignment and functionality between stacked dice. By integrating considerations of available regions on the same die with those of cross-die interactions, the pin/HCB placement is optimized for inter-die communication while satisfying the spatial and connectivity requirements of semiconductor device 400.

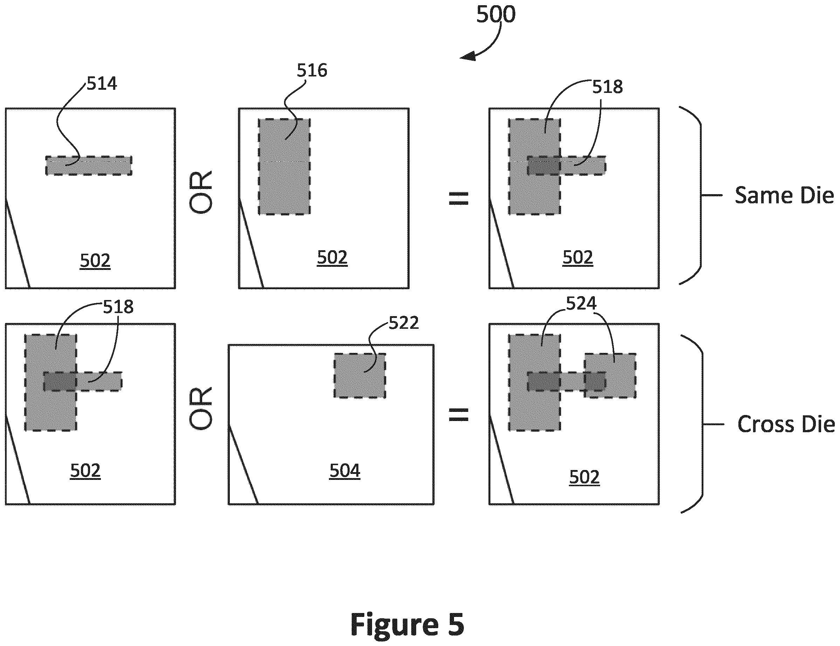

Figure 5 is a simplified diagram illustrating a method for identifying unavailable regions for die-to-die connectivity within a semiconductor device 500 according to the embodiments of the subject technology. This diagram is merely an example, which should not unduly limit the scope of the claims. One of ordinary skill in the art would recognize many variations, alternatives, and modifications.

In addition to identifying available regions for positioning connections, the process of designing 3D ICs may also include identifying regions where the connections cannot be placed (e.g., which may be referred to as "blockage regions") due to the presence of existing structures or circuits within semiconductor device 500. The identification of blockage regions helps to avoid interference with signal integrity and to comply with the placement constraints of semiconductor device 500. For instance, pin placement may need to avoid areas occupied by instantiated intellectual property (IP) units, TSVs, power grids, dummy regions, or areas designated for test structures like probe pads.

In some examples, a first layout of first layer 502 may be analyzed to identify regions 514 and 516, which represent desired blockage regions based on a set of placement constraints. These placement constraints may include considerations such as the presence of other components, the routing of wires, and/or any regions that should be avoided due to other design considerations. In some embodiments, regions 514 and 516 may be aggregated together, resulting in the effective same-die blockage region 518. In other words, region 518 may represent an area on the same die where pins or HCBs should not be placed due to potential interference with the existing structures. For cross-die considerations, similar identification of effective regions may occur on a different layer, as shown with region 522 on the second layer 504. In various implementations, region 518 on first layer 502 and region 522 on second layer 504 may be aggregated together to arrive at region 524, which may be identified as the cross-die blockage region. By determining these blockage regions, the design and planning of pin and HCB placements can be more accurately executed, avoiding these areas to ensure effective and efficient die-to-die communication.

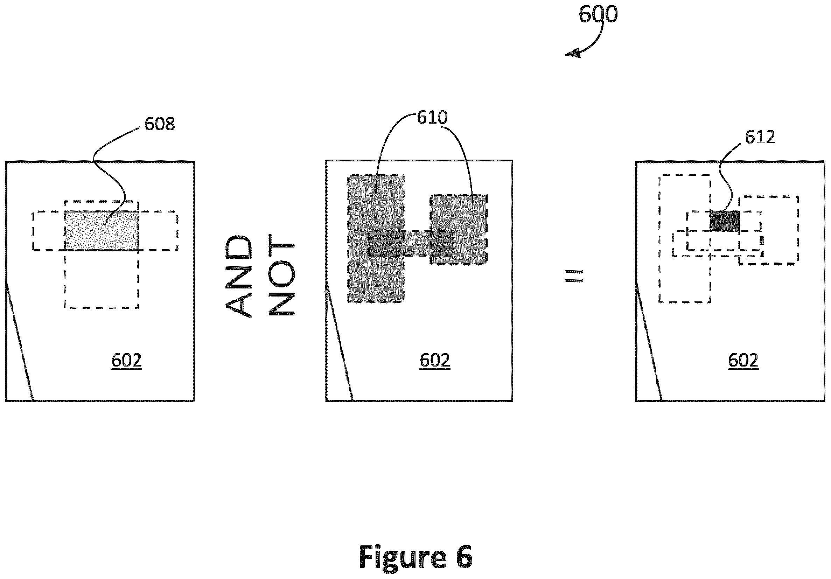

Figure 6 is a simplified diagram illustrating a method for determining regions for die-to-die connectivity within a semiconductor device 600 according to the embodiments of the subject technology. This diagram is merely an example, which should not unduly limit the scope of the claims. One of ordinary skill in the art would recognize many variations, alternatives, and modifications.

Upon identifying the available regions (e.g., region 608) for pin placement and blockage regions (e.g., region 620) to be avoided, region 612 on first layer 602 may be determined as the resultant effective pin region. Region 612 may represent the permissible real estate on first layer 602 for establishing die-to-die connectivity. For instance, region 612 may be determined by subtracting blockage region 610 from the initial available region 608. The exclusion of blockage regions ensures that the remaining available regions are optimized for die-to-die communication, facilitating the efficient and effective operation of the 3D IC stack. It is to be appreciated that the combined analysis of both effective and blockage regions allows for the informed selection of pin and HCB locations, enhancing the device's overall performance by minimizing routing complexity and maintaining signal integrity across the multiple layers of the semiconductor stack.

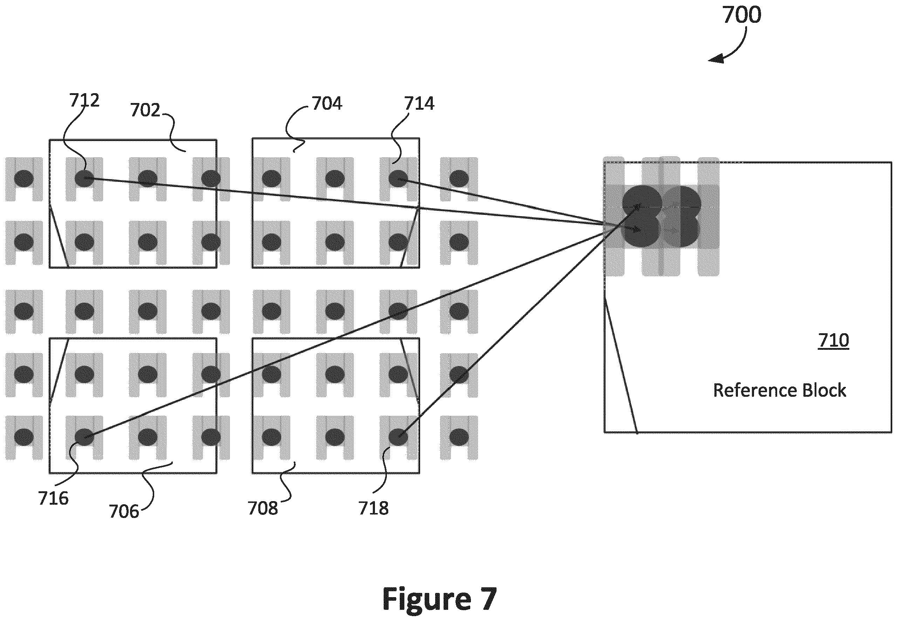

Figure 7 is a simplified diagram illustrating a method for determining HCB placement across multiply-instantiated blocks within a semiconductor device 700 according to the embodiments of the subject technology. This diagram is merely an example, which should not unduly limit the scope of the claims. One of ordinary skill in the art would recognize many variations, alternatives, and modifications.

In various implementations, semiconductor device 700 may include one or more MIBs 702, 704, 706, and 708. Depending on the implementation, these blocks may be instances of the same functional unit or various functional units that require interconnection within semiconductor device 700. In some examples, each block may be coupled to one or more HCBs. For instance, block 702 may be coupled to HCB 712. Block 704 may be coupled to HCB 714. Block 706 may be coupled to HCB 716. Block 708 may be coupled to HCB 718. For each instance, the projection of the corresponding HCB's routing footprint-the path through which the HCB connects different layers-may vary. This variation is relative to each block's instantiation, accounting for the different positions and orientations a block may have within the overall design. For instance, block 702 may be characterized by a first orientation and block 704 may be characterized by a second orientation. The first orientation may be different from the second orientation. It is to be appreciated that despite the differing positions of the HCBs for each block instantiation, the orientation of the HCB routing footprints remains consistent across different instances of the block.

In some implementations, to manage the complexity of varying HCB positions, all HCBs (e.g., HCBs 712, 714, 716, and 718) and their associated routing footprints are mapped onto reference block 710. Reference block 710 may serve as a standard layout from which the placements of all blocks can be compared and aligned. This mapping helps to visualize and plan the connections between HCBs within the complex 3D structure of semiconductor device 700. Depending on the implementation, HCBs that are adjacent or close to each other across the different block instances may be associated with one another and are assigned to a same signal. This ensures that signals are routed efficiently and can communicate between different blocks within semiconductor device 700.

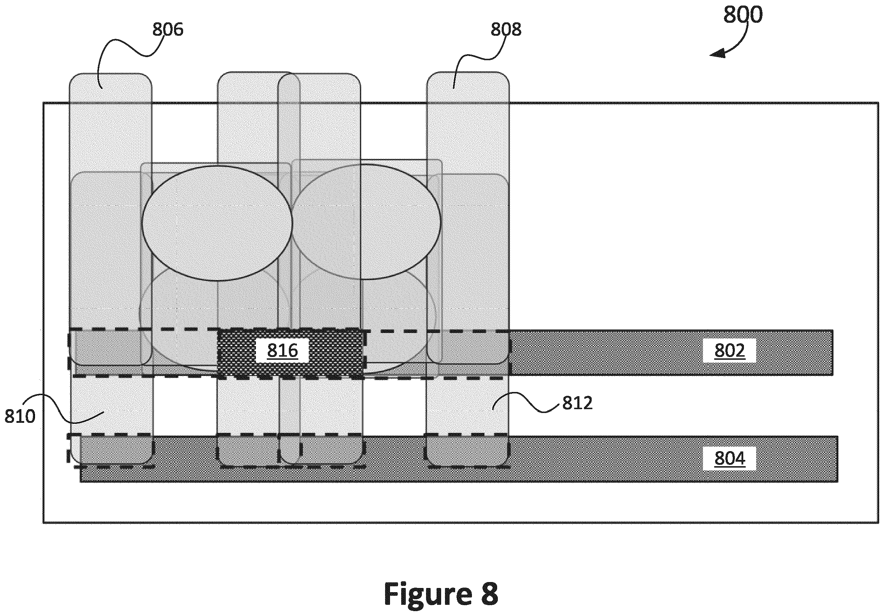

Figure 8 is a simplified diagram illustrating a method for determining pin placement across multiply-instantiated blocks within a semiconductor device 800 according to the embodiments of the subject technology. This diagram is merely an example, which should not unduly limit the scope of the claims. One of ordinary skill in the art would recognize many variations, alternatives, and modifications.

The efficiency of pin placement is an important consideration in semiconductor design. As shown, semiconductor device 800 includes one or more pins (e.g., pins 802 and 804). Each pin may be connected to one or more HCBs (e.g., HCBs 806, 808, 810, and 812). These connections ensure the integrity of signal pathways across the various layers and functional blocks of the device. In various implementations, pin configurations must comply with design rule checking (DRC) standards, ensuring manufacturability and functional reliability. Additionally, the pins must be of adequate size to interface with every associated HCB to maintain the integrity and reliability of electrical connections. Minimizing the pin footprint while satisfying necessary requirements allows for more efficient use of the available space within the semiconductor device. This is particularly beneficial as device architectures become increasingly compact and dense with functionality. It enhances the capacity for integration, enabling a greater number of connections per unit area, contributing to the overall performance and scalability of semiconductor technology.

To identify the minimized pin footprint, an analysis may be conducted on the available pins and their overlap with all HCBs. For instance, pins 802 and 804 may be analyzed, where their respective overlaps with each HCB (e.g., HCBs 806, 808, 810, and 812) may be calculated and compared. For example, pin 804 may be able to connect with only HCBs 810 and 812, while pin 802 can connect with all four HCBs. As a result, region 816 may be determined as the minimal pin footprint necessary for establishing connections to all associated HCBs. By constraining the pin footprint to its minimal necessary dimension, the design allows for a denser packing of functional components, enhancing the overall capability and performance of the semiconductor device. Moreover, this minimization can lead to improved signal routing with reduced parasitic effects, thereby improving the overall electrical performance and enabling higher operational speeds within semiconductor device 800.

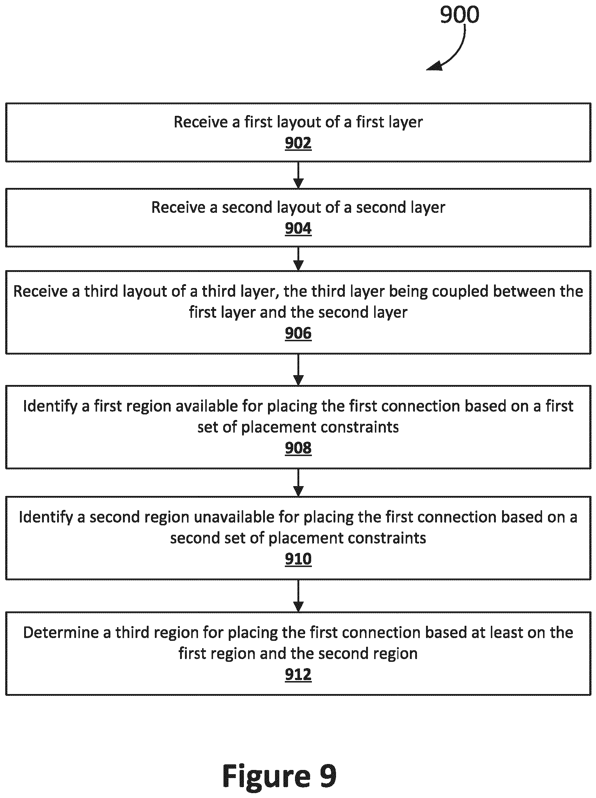

Figure 9 is a simplified flow diagram illustrating a method 900 for determining die-to-die connectivity within a semiconductor device according to the embodiments of the subject technology. This diagram is merely an example, which should not unduly limit the scope of the claims. One of ordinary skill in the art would recognize many variations, alternatives, and modifications. For example, one or more steps may be added, removed, repeated, modified, replaced, overlapped, and/or rearranged, and should not limit the scope of the claims.

At step 902, a first layout of a first layer is received. For example, the first layer may be a portion of a semiconductor die. The first layout may be a design plan or a blueprint that details the placement of components on the first layer. In some examples, the first layer may include a first block. The first block may include a first pin. Depending on the implementation, the first block may include a multiply-instantiated block or a single instance block.

At step 904, a second layout of a second layer is received. For example, the second layer may be a portion of a semiconductor die. The second layout may be a design plan or a blueprint that details the placement of components on the second layer. In some examples, the second layer may include a second block. The second block may include a second pin. Depending on the implementation, the second block may include a multiply-instantiated block or a single instance block. In some embodiments, the first pin and the second pin share a first connectivity.

At step 906, a third layout of a third layer is received. In some implementations, the third layer is coupled to and positioned between the first layer and the second layer. The third layer may include a first connection coupled to and positioned between the first pin and the second pin. For example, the first connection includes a hybrid copper bonding, which can include a fusion of copper-based materials that facilitate electrical connection and thermal performance between the first layer and the second layer.

At step 908, a first region available for positioning the first connection is identified based on a first set of placement constraints. The first set of placement constraints may be associated with the first layout and the second layout and the third layout. For instance, these constraints may include the allowable distances for signal integrity, heat dissipation requirements, the maximum density of connections per unit area, and/or other design considerations. The process may involve considerations of available regions on the same die, as well as cross-die considerations, to ensure that the placement of pins and HCBs adheres to placement constraints.

At step 910, a second region unavailable for positioning the first connection is identified based on a second set of placement constraints. The second set of placement constraints may be associated with the first layout and the second layout and the third layout. For instance, pin placement may need to avoid areas occupied by instantiated intellectual property (IP) units, TSVs, power grids, dummy regions, or areas designated for test structures like probe pads. The identification of blockage regions helps to avoid interference with signal integrity and to comply with the placement constraints of the semiconductor device.

At step 912, a third region for positioning the first connection is determined based at least on the first region and the second region. The first layer and the second layer may be aligned through the first connection at the third region. For example, the third region may be determined by subtracting the second region from the first region. The exclusion of the second region ensures that the remaining available regions are optimized for die-to-die communication, facilitating the efficient and effective operation of the 3D IC stack.

In various implementations, the first layer may further include a third block. The first block may be characterized by a first orientation. The third block may be characterized by a second orientation. The first orientation may be different from the second orientation. In some examples, the third block includes a third pin. The third pin may be configured to couple to a second connection of the third layer. The first pin and the third pin may share a second connectivity.

According to some embodiments, method 900 may further include determining a fourth region for positioning the second connection and determining an association between the first connection and the second connection by mapping the third region and the fourth region onto a reference block. To minimize the pin footprint, method 900 may further include determining a first pin configuration characterizing the first pin and the second pin based on the mapping of the third region and the fourth region on the reference block.

While the above is a full description of the specific embodiments, various modifications, alternative constructions and equivalents may be used. Therefore, the above description and illustrations should not be taken as limiting the scope of the subject technology which is defined by the appended claims.

## Claims

1. A device comprising:
a first layer comprising a first block, the first block comprising a first pin;
a second layer comprising a second block, the second block comprising a second pin; and
a third layer coupled to and positioned between the first layer and the second layer, the third layer comprising a first connection coupled to and positioned between the first pin and the second pin, the first pin and the second pin sharing a first connectivity;
wherein the first layer and the second layer are aligned at a first region of the first connection based on a set of design strategies.

2. The device of claim 1, wherein
the first connection comprises a hybrid copper bonding.

3. The device of claim 1 or 2, wherein
a distance between the first pin and the first connection is less than or equal to 30 um.

4. The device of any one of the claims 1 to 3, wherein
the first block comprises a multiply-instantiated block.

5. The device of any one of the claims 1 to 4, wherein:
the set of design strategies comprises a first set of placement constraints and a second set of placement constraints;
the first set of placement constraints is associated with a second region available for positioning the first connection; and
the second set of placement constraints is associated with a third region unavailable for positioning the first connection;
wherein in particular
the first region is determined based at least on the second region and the third region.

6. The device of any one of the claims 1 to 5, wherein
the first layer further comprises a third block, the third block comprising a third pin, the first pin and the third pin share a second connectivity.

7. A method comprising:
receiving a first layout of a first layer, the first layer comprising a first block, the first block comprising a first pin;
receiving a second layout of a second layer, the second layer comprising a second block, the second block comprising a second pin;
receiving a third layout of a third layer, the third layer being coupled to and positioned between the first layer and the second layer, the third layer comprising a first connection configured to couple the first pin to the second pin, the first pin and the second pin sharing a first connectivity;
identifying a first region available for positioning the first connection based on a first set of placement constraints;
identifying a second region unavailable for positioning the first connection based on a second set of placement constraints; and
determining a third region for positioning the first connection based at least on the first region and the second region, the first layer and the second layer being aligned at the third region of the first connection.

8. The method of claim 7, wherein:
the first layer further comprises a third block, the first block being **characterized by** a first orientation, the third block being **characterized by** a second orientation, the first orientation being different from the second orientation; and
the third block comprises a third pin, the third pin is configured to couple to a second connection of the third layer.

9. The method of claim 8, wherein
the first pin and the third pin share a second connectivity.

10. The method of claim 8 or 9, further comprising:
determining a fourth region for positioning the second connection; and
determining an association between the first connection and the second connection by mapping the third region and the fourth region onto a reference block;
wherein in particular the method further comprises
determining a first pin configuration characterizing the first pin and the second pin based on the mapping of the third region and the fourth region on the reference block.

11. The method of any one of the claims 7 to 10, wherein
the first block comprises a multiply-instantiated block.

12. The method of any one of the claims 7 to 11, wherein
the first set of placement constraints is associated with the first layout and the second layout and the third layout.

13. A device comprising:
a first layer comprising a first block, the first block comprising a first pin;
a second layer comprising a second block, the second block comprising a second pin; and
a third layer coupled to and positioned between the first layer and the second layer, the third layer comprising a first connection coupled to and positioned between the first pin and the second pin;
wherein the first layer and the second layer are aligned at a first region of the first connection, and the first region is determined by:
identifying a second region available for positioning the first connection based on a first set of placement constraints;
identifying a third region unavailable for positioning the first connection based on a second set of placement constraints; and
determining the third region based at least on the first region and the second region.

14. The device of claim 13, comprising at least one of the following features
(A) the first block comprises a multiply-instantiated block;
(B) a distance between the first pin and the first connection is less than or equal to 30 um; and
(C) the first connection comprises a hybrid copper bonding.

15. The device of claim 13 or 14, wherein
the first layer further comprises a third block, the third block comprises a third pin, and the third pin is configured to couple to a second connection of the third layer;
wherein in particular
the first connection is associated with the second connection.
